(19) Europäisches Patentamt / European Patent Office / Office européen des brevets

(11) **EP 2 459 443 B1**

(12) **EUROPEAN PATENT SPECIFICATION**

(45) Date of publication and mention of the grant of the patent:
**20.05.2015 Bulletin 2015/21**

(21) Application number: **09847899.3**

(22) Date of filing: **27.07.2009**

(51) Int Cl.:
**B64C 25/56** *(2006.01)*     **B64D 25/00** *(2006.01)*

(86) International application number:
**PCT/US2009/051821**

(87) International publication number:
**WO 2011/014153 (03.02.2011 Gazette 2011/05)**

(54) **AIRCRAFT OCCUPANT PROTECTION SYSTEM**

SCHUTZSYSTEM FÜR FLUGZEUGPASSAGIERE

SYSTÈME DE PROTECTION DES PASSAGERS D'UN AÉRONEF

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**06.06.2012 Bulletin 2012/23**

(73) Proprietor: **Bell Helicopter Textron Inc.**
**Fort Worth, TX 76101 (US)**

(72) Inventors:
 • **HILL, Andrew, T.**
  **Arlington**
  **TX 76012 (US)**
 • **SMITH, Michael, R.**
  **Colleyville**
  **TX 76034 (US)**
 • **LU, Zi**
  **Coppell**
  **TX 75019 (US)**
 • **THO, Cheng-Ho**
  **Irving, Texas**
  **TX 75038 (US)**

(74) Representative: **Lawrence, John**
 **Barker Brettell LLP**
 **100 Hagley Road**
 **Edgbaston**
 **Birmingham B16 8QQ (GB)**

(56) References cited:
 | | |
 |---|---|
 | WO-A1-2009/054844 | WO-A2-2008/054401 |
 | WO-A2-2009/001342 | DE-A1- 4 118 300 |
 | DE-A1- 4 320 470 | US-A- 5 765 778 |
 | US-A- 5 992 794 | US-B1- 6 338 456 |

## Description

Technical Field

The present disclosure relates generally to aircraft safety systems, including safety systems that comprise crash attenuation systems for aircraft.

Description of the Prior Art

Currently internal airbags are used in the automotive industry within the occupied volume to mitigate occupant injuries. Similarly, external airbags have been used to attenuate decelerative loads to air and space vehicles, such as escape modules, upon contact with the ground or water. Examples include the NASA Mars Rovers and the crew module of the General Dynamics/Grumman F-111.

During impact, the gas in the airbag must be vented to prevent gas pressurization and subsequent re-expansion, which may cause the occupant to accelerate backward. This effect is commonly known as rebound. In addition, the gas may be vented to prevent over-pressurization, which can cause failure of the airbag. Venting may be accomplished, for example, through discrete vents or through a porous membrane that forms at least a portion of the skin of the airbag.

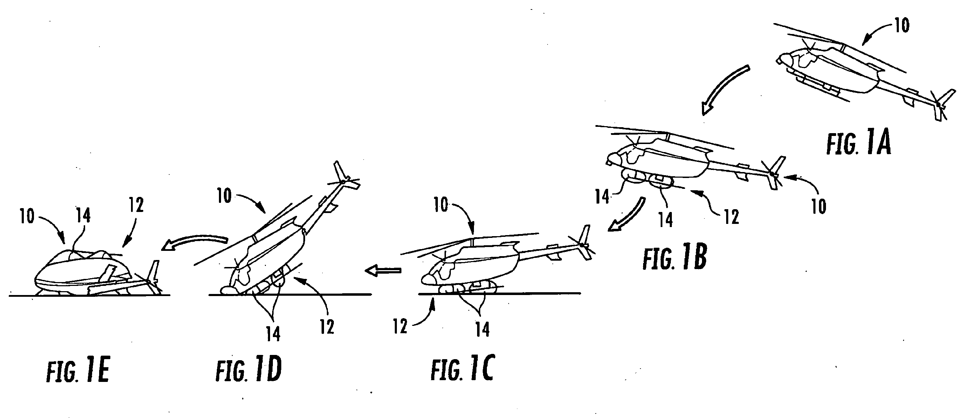

One shortcoming of prior external airbag systems is that they fail to prevent post-impact pitch-over, or "tumbling," of an aircraft having a forward and/or lateral velocity at impact with a hard surface. For example, referring to Figures 1a-1e, an aircraft 10 that is equipped with a prior external airbag system 12 is shown at different points during a crash sequence from (a) to (e). The crash sequence involves the aircraft 10 having both forward and downward velocities at (a) and (b). The airbag system 12 properly deploys its airbags 14 at (b), but still incurs serious damage due to pitch-over of the aircraft 10 as shown at (d) and (e). Thus, improvements are still needed in external airbag systems, particularly improvements to the pitch-over stability of an aircraft equipped with an external airbag system.

WO 2009/05484, which is considered the closest known state of the art, discloses a crash system that includes an airbag that deploys beneath an aircraft when it is realized that crashing is imminent. The airbag is coupled to a housing beneath the aircraft. Vents are positioned around the housing permitting the airbag to extend beyond the perimeter of the housing when inflated. A vent passage is disclosed extending from the interior of the housing.

WO 2008/054401 shows a similar type of airbag crash system wherein valves are located on upper portions of the airbag. The valves are sized to be relatively small.

Brief Description of the Drawings

For a more complete understanding of the present disclosure, including its features and advantages, reference is now made to the detailed description taken in conjunction with the accompanying drawings, in which:

Figures 1a-1e show a crash sequence for a helicopter equipped with a prior external airbag system;

Figure 2 is a perspective view of a helicopter equipped with an external airbag system;

Figure 3 is a perspective view of an airbag used with the external airbag system shown in Figure 2;

Figures 4a-4c are cross-sectional views of a vent valve in full-open, partially-open, and closed configurations, respectively;

Figure 5 is a diagram of the vent plate shown in Figures 4a-4c;

Figure 6 is block diagram of the helicopter shown in Figure 2;

Figure 7 is a block diagram illustrating the operation of the crash attenuation system of the helicopter shown in Figure 2;

Figure 8 shows a chart of exemplary data representative of a relationship between airspeed of the helicopter and open vent area;

Figures 9a-9d show a crash sequence for a helicopter equipped with an external airbag system according to the present disclosure;

Figure 10 shows a cross-sectional view of an airbag of the external airbag system of the present disclosure;

Figure 11 shows a perspective view of a helicopter equipped with an alternative external airbag system;

Figure 12 shows a block diagram of an occupant protection system;

Figure 13 shows a block diagram of a more detailed embodiment of the occupant protection system shown in Figure 12;

Figure 14 shows a partial top view of a venting system for a crash attenuation system;

Figure 15 shows a partially sectioned side view of a first embodiment of the venting system shown in Figure 14;

Figure 16 shows a partially sectioned side view of a second embodiment of the venting system shown in Figure 14;

Figure 17 shows a cross-sectional side view of the vent passage of the venting system shown in Figure 14, illustrating a first embodiment of a vent valve for the venting system; and

Figure 18 shows a cross-sectional side view of the vent passage of the venting system shown in Figure 14, illustrating a second embodiment of a vent valve for the venting system.

Description of the Preferred Embodiment

The present disclosure provides for a number of safety improvements for aircraft, including an impact detection system, an impending crash detection system, and an inflatable crash attenuation system for an aircraft.

The inflatable crash attenuation system can comprise an airbag that is inflated prior to impact and controllably vented during impact so as to prevent aircraft pitch-over. The system can be used on a number of different types of aircraft, for example, helicopter, fixed wing aircraft, and other aircraft, and in particular those that are rotorcraft. The system improves on the prior art by providing automatic control of the venting valves based on sensed crash conditions, thereby effectively shifting the center of impact pressure and preventing aircraft pitch-over.

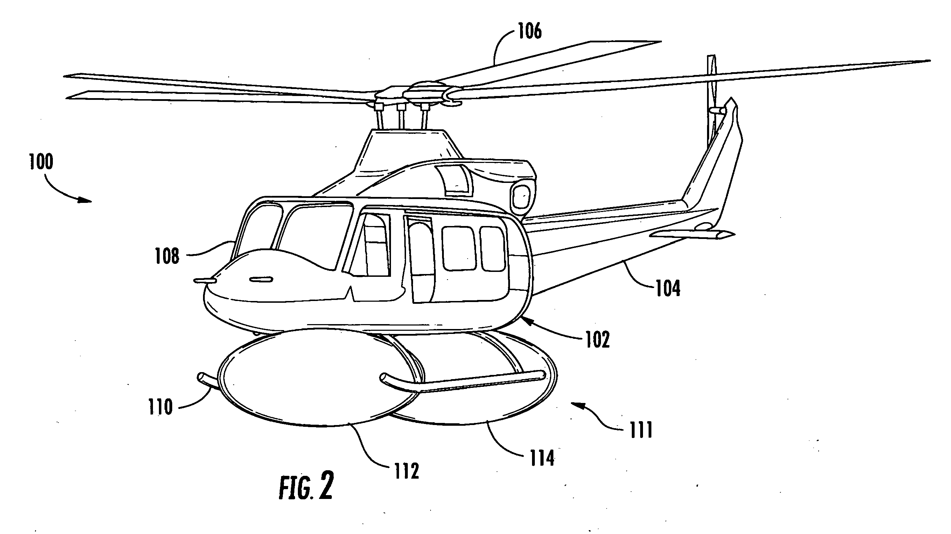

Figure 2 shows a helicopter 100 incorporating the crash attenuation system according to the present disclosure. Helicopter 100 comprises a fuselage 102 and a tail boom 104. A rotor 106 provides lift and propulsive forces for flight of helicopter 100. A pilot sits in a cockpit 108 in a forward portion of fuselage 102, and a landing skid 110 extends from a lower portion of fuselage 102 for supporting helicopter 100 on a rigid surface, such as the ground.

A problem with rotor 106 or the drive system for rotor 106 may necessitate a descent from altitude at a higher rate of speed than is desirable. If the rate is an excessively high value at impact with the ground or water, the occupants of helicopter 100 may be injured and helicopter 100 may be severely damaged by the decelerative forces exerted on helicopter 100. To reduce these forces, an airbag assembly 111 comprising inflatable, non-porous airbags 112, 114 is installed under fuselage 102. Though not shown in the drawings, airbags 112, 114 are stored in an uninflated condition and are inflated under the control of a crash attenuation control system (described below).

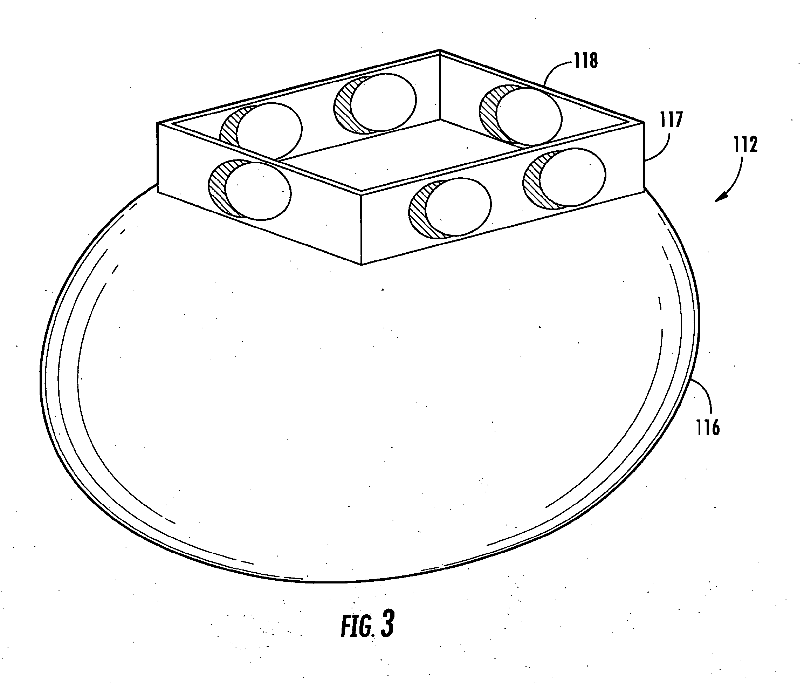

Figure 3 is an enlarged view of airbag 112, which has a non-porous bladder 116, which is sealed to a housing 117 having a plurality of discrete vents 118.

Airbag 112 is shown in Figure 3, but it should be noted that airbags 112 and 114 can have generally identical configurations. In a preferred embodiment, the bladder 116 is formed of a fabric that comprises resilient material such as Kevlar and/or Vectran. Vents 118 communicate with the interior of bladder 116, allowing for gas to controllably escape from within the airbag 112. In the embodiment shown, vents 118 are open to the ambient air, though vents 118 may be connected to a closed volume, such as another airbag or an accumulator (not shown). Also, while a plurality of vents are shown in the embodiment illustrated in Figure 3, alternative embodiments can include only a single vent 118.

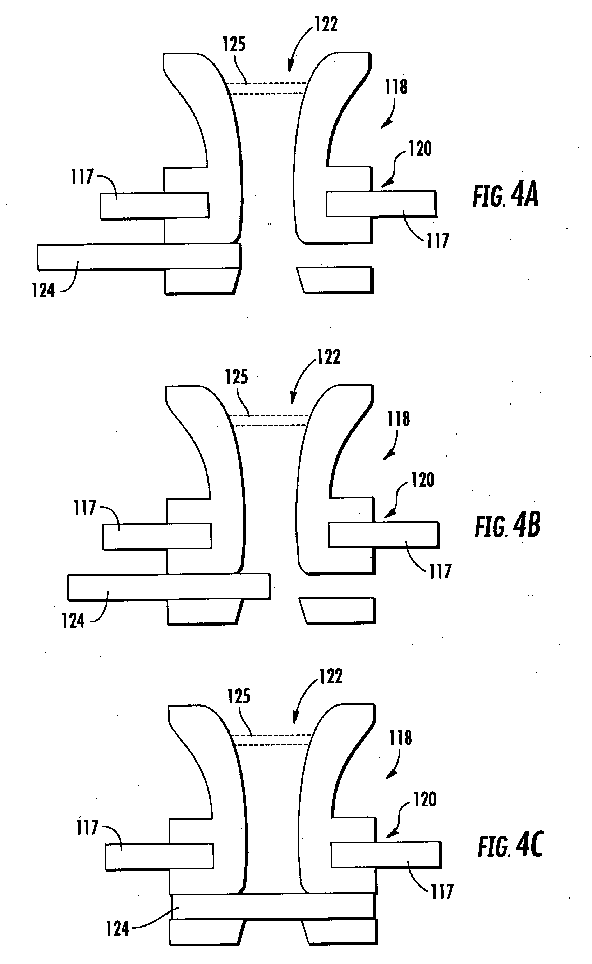

Referring to Figures 4a-4c, each vent 118 has a vent valve 120 for controlling the flow of gas through vent 118. Vent 118 and vent valve 120 together form a vent passage 122 for channeling gas flowing out of airbag 112. Each vent valve 120 is sealingly mounted in housing 117 (or bladder 116 in some embodiments) to prevent the leakage of gas around vent 118, which forces venting gas to flow through passage 122. A vent plate 124 is configured to be moveable between an open position, for example shown in Figure 4a, at least one intermediate position, for example as shown in Figure 4b, and a closed position, for example as shown in Figure 4c. Figure 4a shows vent plate 124 in the open position, or open state, in which a maximum amount of gas is allowed to flow through passage 122 from within airbag 112. Figure 4b shows vent plate 124 in an intermediate position, or intermediate state, in which a selected amount of gas less than the maximum is allowed to flow through passage 122 from within airbag 112. Figure 4c shows vent plate 123 in the closed position, or closed state, in which gas is prevented from flowing out of airbag 112 through the passage 122. Though only a single intermediate position is shown, it should be understood that various additional intermediate positions can be selected in order to control the amount of gas that is allowed to escape from within the airbag 112 through the vent 118. Also, while the vent valve 120 is shown as a sliding valve, it will be understood by one skilled in the art that vent valve 120 may alternatively be other suitable types of valves. Control of vent valves 120 may be accomplished though any number of means, including, for example, electrorheological means. In some embodiments, the vents 118 can be sealed with an optional pop-off pressure release mechanism, preferably a pressure sensitive fabric 125. In such embodiments, once the fabric 125 pops off, the vent valve 120 controls release of the pressurized air inside the airbag 112, 114.

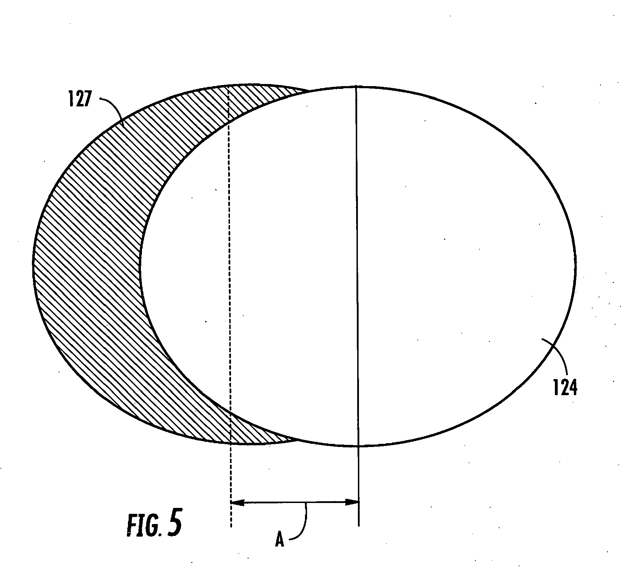

Referring next to Figure 5, as will be discussed in greater detail below, each vent plate 124 can be selectively positioned to any position between a full open position and a full closed position. In the view shown in Figure 5, the hatched area 127 represents the open vent area, through which gas can escape from within an airbag 112 or 114 through passage 122. The vent plate can be moved a distance A according to a desired amount of open vent area 127. The open vent area 127 will be a total open vent area "S" if there is only one vent 118; otherwise, the open vent area 127 of each vent 118 is summed to be a total vent area "S." The total vent area S is a function of crash conditions:

$$S = f(\dot{x}, \dot{z}, \theta, \phi, \dot{\theta}, \dot{\phi}, \Delta, \ldots)$$

where $\dot{x}$ represents forward velocity, $\dot{z}$ represents downward or sink velocity, $\theta$ represents pitch angle, $\phi$ represents roll angle, $\dot{\theta}$ represents pitch rate, $\dot{\phi}$ represents roll rate, and $\Delta$ represents the slope of the impact surface (e.g., the slope of the ground).

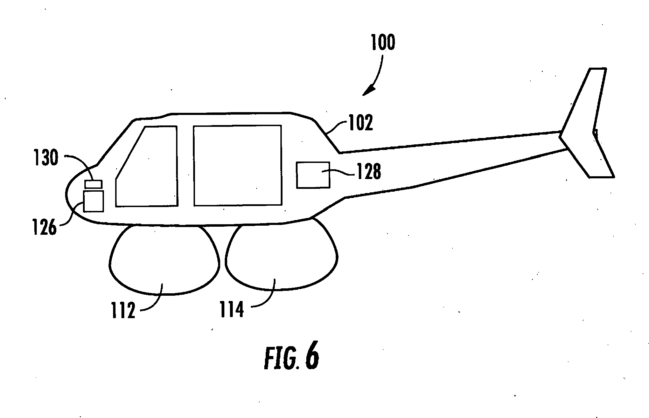

Figure 6 shows airbags 112 and 114 mounted to a lower portion of fuselage 102 and show additional components of the crash attenuation system according to the present disclosure. A computer-based control system 126, which is shown mounted within fuselage 102, is provided for controlling the operation of components associated with airbags 112, 114. Each airbag 112, 114 has a gas source 128, such as a gas generator, for inflation of the airbags 112, 114. In some embodiments, a secondary gas source, such as compressed gas tank (not shown), can be provided for post-crash re-inflation of airbags 112, 114 so that the airbags 112, 114 can be used as floatation devices in the event of a water landing. The gas source 128 may be of various types, such as gas-generating chemical devices or compressed air, for providing gas for inflating airbags 112, 114. In addition, the crash attenuation system has a sensor system 130 for detecting crash conditions used to determine the total vent area S, such as rate of descent and/or ground proximity. Airbags 112, 114 can also have a water-detection system (not shown), which may have sensors mounted on fuselage 102 for detecting a crash in water. Gas source 128, vent valves 120, and sensor system 130 are in communication with control system 126, allowing control system 126 to communicate with, monitor, and control the operation of these attached components. In addition, control system 126 may be in communication with a flight computer or other system for allowing the pilot to control operation of the crash attenuation system. For example, the pilot may be provided means to override, disarm, or arm the crash attenuation system.

The sensor system 130 is shown in Figure 6 as a discrete component for the sake of convenience. However, it should be noted that actual implementations of the sensor system 130 can comprise a number of components that are located at various locations on the helicopter 100. The sensor system 130 can include, for example, sensors for detecting pitch and roll attitude, pitch and roll rate, airspeed, altitude, rate of descent, and slope of the impact surface.

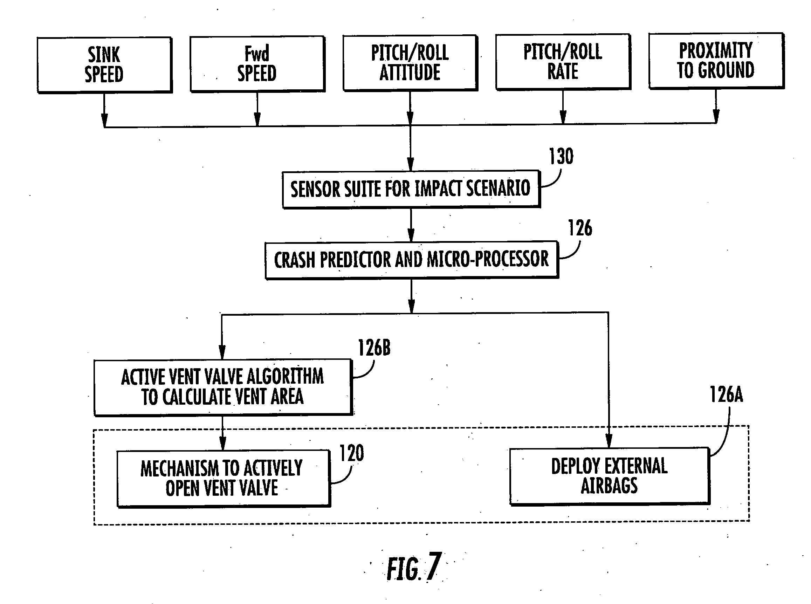

Referring next to Figure 7, an exemplary embodiment of the sensor system 130 is configured to detect various crash conditions, which can include, for example, one or more of the sink speed, forward speed, pitch and roll attitude, pitch and roll rate, and proximity to the ground of the helicopter 100. The control system 126 receives data from the sensor system 130 representative of the detected crash conditions. In a preferred embodiment, the control system 126 is a microprocessor-based system configured to operate as a crash predictor. When excessive oncoming velocity of the ground within a certain altitude range is detected by the control system 126, the gas source 128 is triggered to inflate the airbags 112, 114 (indicated at box 126A) prior to impact of the helicopter 100 with the ground. At the same time, the control system 126 activates the vent valves 120 to adjust the open vent area based on an active vent valve algorithm as indicated at box 126B.

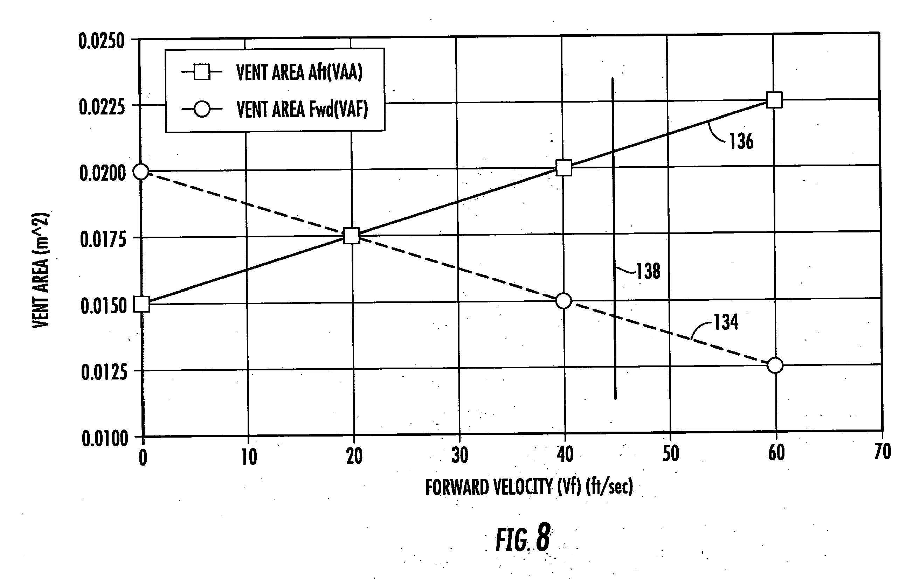

Figure 8 shows an example of a relationship that can be used by the control system 126 for adjusting the open vent areas at 126B. In Figure 8, a chart is shown that illustrates a relationship between open vent area and forward velocity of a helicopter for a given sink velocity of 36 feet per second. The line 134 maps open vent areas to forward velocities for the forward airbag 112, while the line 136 maps open vent areas to forward velocities for the aft airbag 114. It should be appreciated that the relationship will vary for different sink velocities. The relationship will also vary depending on a number of other factors, for example aircraft characteristics, such as aircraft weight and balance, and the number and characteristics of the airbags. The data can be determined using known flight simulation techniques, for example simulation software, for simulating crash results. Using such techniques, data can be collected based on simulation of crash results for various crash conditions and open vent areas.

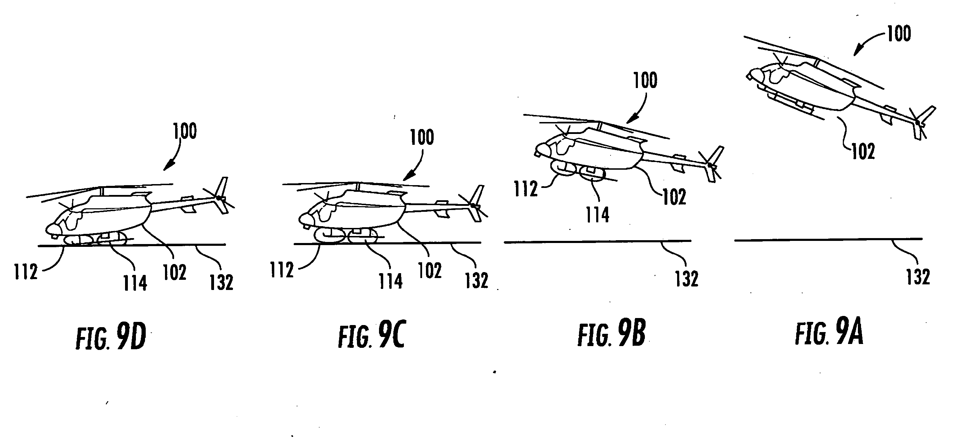

Figures 9a through 9d illustrate operation of the crash attenuation system. In operation, if an impending crash is sensed by sensor system 130, for example, by excessive oncoming rate of the ground within a certain attitude range, control system 126 triggers gas source 128 to inflate airbags 112, 114 at the appropriate time to allow inflation just as airbags 112, 114 contact the impact surface (ground or water).

Figure 9a shows an impending crash onto ground 132, which is sensed by the control system 126 based on data received from the sensor system 130. At Figure 9b, gas source 128 is triggered, causing airbags 112 and 114 to inflate just prior to contact with ground 132. The control system 126 also calculates the open vent areas for each of the airbags 112, 114. In this case, the control system 126 determines that the crash conditions correspond to the line 138 shown in Figure 8, which requires the open vent area of aft airbag 114 be greater than the open vent area of forward airbag 112. Accordingly, at Figure 9c the open vent area of aft airbag 114 is set to an area of about 0.0205 square meters and the open vent area of forward airbag 112 is set to an area of about 0.0145 square meters. Thus, as shown in Figure 9c, the aft airbag 114 deflates faster than the forward airbag 112. As a result, as shown at Figure 9d, the helicopter 100 comes to a stop without experiencing a pitchover.

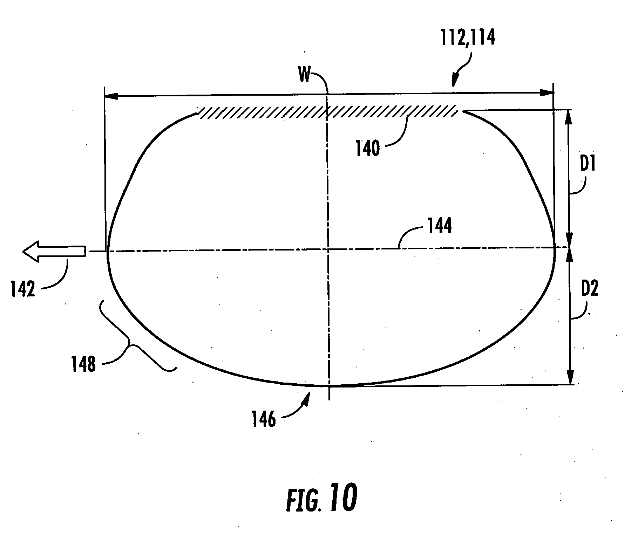

Referring next to Figure 10, a cross-section of a preferred embodiment of an airbag 112, 114 is shown. The hatched area 140 represents the portion of the airbag 112, 114 that is adjacent to the underside of the fuselage 102. The arrow 142 points towards the forward end of the helicopter 100. The broken line 144 is the widest portion of the airbag 112, 114 between the top (hatched area 140) and bottom 146 of the airbag 112, 114. As shown in Figure 10, for a width W of the airbag at line 144, the distance D1, which is the distance between the top 140 and the line 144, and the distance D2, which is the distance between the bottom 146 and the line 144, are equal and determined based on the following relationship:

$$D1, D2 = \frac{W}{2\sqrt{3}}$$

This geometry maximizes crush distance for optimal energy absorption management. Also, the curved region 148 provides anti-plow, anti-scooping geometry to assist in preventing pitch-over of the helicopter 100.

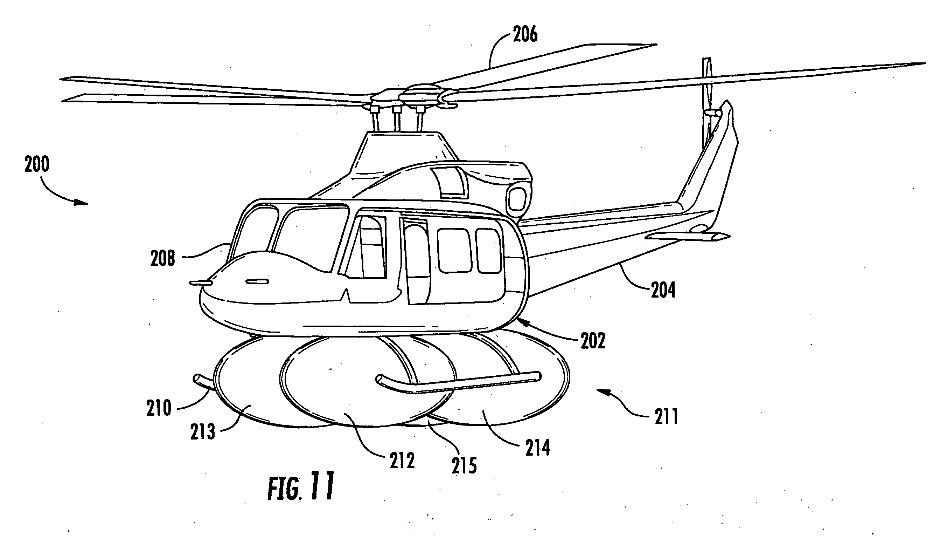

Referring next to Figure 11, an alternative embodiment of the helicopter 200 is shown. As mentioned above, while the present crash attenuation system has been discussed primarily in connection with two airbags 112, 114, alternative embodiments can have additional airbags. For example, the helicopter 200 shown in Figure 11 has an airbag assembly 211 comprising four airbags 212, 213, 214, and 215. Like the helicopter 100, the helicopter 200 comprises a fuselage 202 and a tail boom 204. A rotor 206 provides lift and propulsive forces for flight of helicopter 200. A pilot sits in a cockpit 208 in a forward portion of fuselage 202, and a landing skid 210 extends from a lower portion of fuselage 202 for supporting helicopter 200 on a rigid surface, such as the ground.

A problem with rotor 206 or the drive system for rotor 206 may necessitate a descent from altitude at a higher rate of speed than is desirable. If the rate is an excessively high value , at impact with the ground or water, the occupants of helicopter 200 may be injured and helicopter 200 may be severely damaged by the decelerative forces exerted on helicopter 200. To reduce these forces, inflatable, non-porous airbags 212, 213, 214, and 215 are installed under fuselage 202. Though not shown in the drawings, airbags 212, 213, 214, and 215 are stored in an uninflated condition and are inflated under the control of a crash attenuation control system.

The crash attenuation system of the helicopter 200 can operate as discussed above in connection with the helicopter 100. In addition, compared to the helicopter 100, the helicopter 200 provides additional lateral roll-over prevention capabilities. Each of the airbags 212, 213, 214, and 215 is independently actively vented during a crash sequence. Thus, if the helicopter 200 is approaching the ground with a lateral velocity, the airbags 212 and 214, which are located along one side of the helicopter 200, can be vented more or less than the airbags 213 and 215, which are located along the other side of the helicopter 200, as necessary based on detected crash conditions in order to prevent the helicopter 200 from rolling over after impact with the ground.

The above disclosure describes a system and method for actively controlling the venting of external airbags based on sensed crash conditions, such as airspeed, sink speed, pitch attitude, roll attitude, pitch rate, and roll rate. This active venting of the external airbags causes different airbags located at different locations of an aircraft exterior to deflate at different rates upon impact, thereby shifting an aircraft's center of impact pressure.

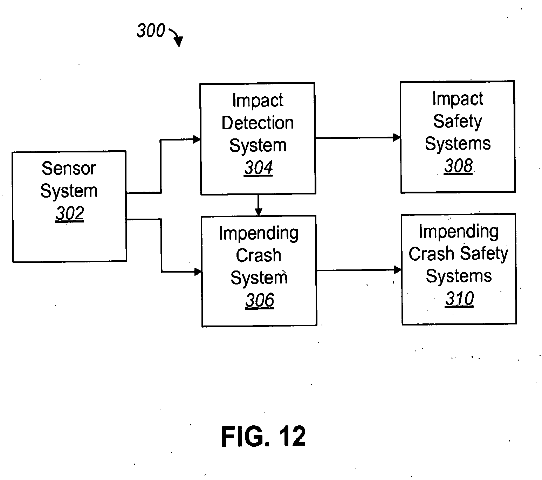

Turning next to Figure 12, a block diagram shows an occupant protection system (OPS) 300. The OPS 300 provides a control system that computes various impact scenarios (forward/vertical velocities, pitch/roll attitudes, pitch/roll velocities, impact angle, and likely surface characteristics) based upon signals detected by various sensors 302, electronic maps, and other available data. The control system algorithm is then used to actively control and schedule various safety systems throughout the aircraft. The OPS 300 includes a sensor system 302, which can serve as an embodiment of the sensor system 130 described above. The OPS 300 also includes an impact detection system 304 and an impending crash detection system 306, either one or both of which can serve as the control system 126 described above. The impending crash detection system 306 is configured for detecting an imminent crash, while the impact detection system 304 is configured for detecting the actual occurrence of a crash.

The impending crash detection system 306 is in communication with one or more sensors of the sensor system 302. While the aircraft is in flight, the impending crash detection system 306 can be configured for periodically receiving information from one or more sensors of sensor system 302 as well as other available data from other aircraft systems. The crash detection system 306 is configured to evaluate the received information and determine whether there is excessive oncoming velocity of the ground within a certain altitude range, as would occur in the event of an imminent impact. If an impending crash is detected, the crash detection system 306 is configured to communicate with one or more impending crash safety systems 310 in order to initiate a series of actions to protect the occupants of the aircraft.

The impact detection system 304 is configured for detecting whether an actual impact is occurring or has occurred. While the aircraft is in flight, the impact detection system 304 can be configured for periodically receiving information from one or more sensors of sensor system 302 as well as other available data from other aircraft systems. The impact detection system 304 is configured to evaluate the received information and determine whether an impact is occurring or has occurred, for example by detecting a sudden stop or drop in forward and/or downward velocity as would occur during an impact. If an impact is detected, the impact detection system 304 is configured to communicate with one or more impact safety systems 308 in order to initiate a series of actions to protect the occupants of the aircraft.

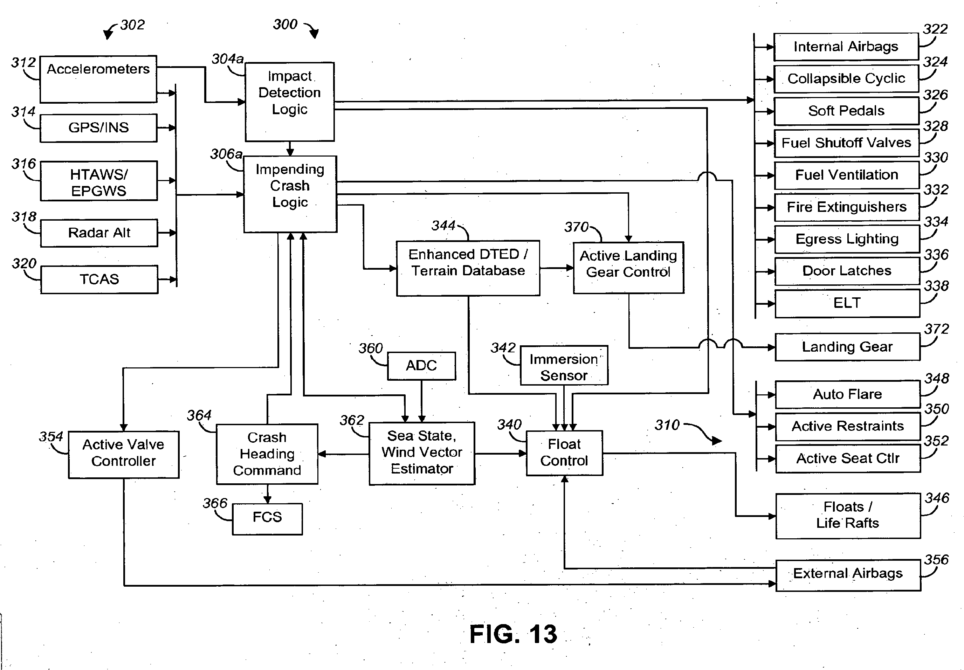

Turning next to Figure 13, a more detailed block diagram shows an example of an embodiment of the OPS 300. In the illustrated embodiment, the sensor system 302 includes one or more of the following: one or more accelerometers 312, a Global Positioning System (GPS) and/or Inertial Navigation System (INS) 314, a Helicopter Terrain Awareness Warning System (HTAWS) and/or Enhanced Ground Proximity Warning System (EGPWS) 316, an altimeter 318, and a Transponder Collision Avoidance System (TCAS) 320.

Impact detection system 304 includes impact detection logic 304a, which receives and evaluates data from one or more accelerometers 312. Data from the accelerometers 312 can be evaluated by the impact detection system 304 in order to determine whether an impact is occurring or has occurred. If an actual impact is detected, the impact detection system 304 can control one or more of the impact safety systems 308 to take one or more predetermined actions that would be desirable in the event of a crash. Figure 13 shows the following examples of impact safety systems 308: internal airbags 322, collapsible cyclic stick 324, soft pedals 326, fuel shutoff valves 328, fuel ventilation 330, fire extinguishers 332, egress lighting 334, door latches 336, and an Emergency Locator Transmitter (ELT) 338.

The impact safety systems 308 can include conventional systems or systems that improve on conventional systems. For example, the internal airbags 322 can be of the type known in the art for use in aircraft and automobiles in order to help prevent injuries during a crash.

A collapsible cyclic stick is disclosed in U.S. Patent No. 5,431,361 to Carnell et al., which is hereby incorporated by reference. The collapsible cyclic stick disclosed by Carnell et al. is designed for use in combination with an energy attenuating stroking crew seat. The Carnell et al. cyclic stick is mechanically connected to the seat such that the cyclic stick is displaced as a result of the stroking action of the seat during a severe crash. The collapsible cyclic stick 324 can be similar to the Carnell cyclic stick, except that an actuator or the like is used to displace or collapse the collapsible cyclic stick 324 according to control signals from the impact detection system 304. Similarly, the soft pedals 326 are controllable by the impact detection system 304 to collapse, displace, or become freely movable if an impact is detected. These measures help prevent injury to the pilot during a crash that could otherwise occur due to forceful contact with the cyclic stick and/or pedals.

A number of systems are controlled in order to reduce the risk of fire during and after an impact. For example, the fuel shutoff valves 328 can be controlled to close and/or the fuel pump can be shut off, for example via a Full Authority Digital Engine Control (FADEC) if the aircraft is so equipped. Similarly, fuel ventilation 330 can be closed in order to prevent the release of flammable vapors into a crash environment that might include ignition sources, such as sparking from damaged wiring. Also, fire extinguishers 332 can be armed and/or activated.

Other systems can be controlled for making it easier for the pilots and crew to exit the aircraft, such as activation of egress lighting 334, unlocking and/or opening door latches 336. An active rotor brake can stop the rotating blades overhead to protect the occupant's heads. An automatic seatbelt release would speed egress in the event of a water landing and the aircraft filling with water. Finally, an Emergency Locator Transmitter (ELT) 338 can be activated for allowing the aircraft to be located by search parties.

In addition, the impact detection system 304 can issue an impact detection signal to a float control 340. The float control 340 also receives data from an immersion sensor 342 and from a terrain database 344. Based on the received data, the float control 340 can be configured to activate external airbags and/or life rafts 346 in the event of a water landing or crash. Floats would be configured to preserve the breathable airspace within the aircraft in case the aircraft rolls or flips over.

These and other systems can be activated by the impact detection system 304 since they are desirable in the event of an actual crash, but should not be activated unless an actual crash has occurred because they would hinder the operation of the aircraft. Other systems designated as impending crash safety systems 310 can be controlled for improving safety during impact, but do not hinder operation of the aircraft so they can be activated earlier than the impact safety systems 308 before an actual crash has occurred.

Impending crash detection system 306 includes impending crash detection logic 306a, which receives and evaluates data from sensor systems 302, which can include one or more accelerometers 312, GPS and/or INS 314, HTAWS and/or EPGWS 316, radar altimeter 318, and TCAS 320. The impending crash detection system 306 also receives airspeed data from air data computer (ADC) 360 via a sea state, wind vector estimator 362. Data from the sensor system 302 can be evaluated by the impending crash detection system 306 in order to determine whether an impact is likely to occur. If an impending crash is detected, the impending crash detection system 306 can control one or more of the impending crash safety systems 310 to take one or more predetermined actions that would be desirable in the event of an impending crash. Figure 13 shows the following examples of impending crash safety systems 310: automatic flare system 348, active restraint system 350, active seat control system 352, as well as a crash attenuation system, which can be a crash attenuation system according to any of the embodiments disclosed herein, having an active vent controller 354 and external airbags 356.

The impact safety systems 308 can include conventional systems or systems that improve on conventional systems. For example, the automatic flare system 348 can be of the type of maneuver known for decelerating the helicopter in order to reduce forward speed and decrease the rate of descent. The impending crash detection system 306 can also send data to a crash heading command controller 364, which can determine a vehicle state (velocities, rates, accelerations, etc) and make adjustments to the flight control system 366. The active restraint system 350 can include a haul-back restraint system where shoulder restraints are retracted in order to straighten the spine of the pilot or crewmember. This helps to properly position the person for impact in order to reduce the chances of a back or neck injury to the extent possible. The active seat control system 352 can be activated to control seats to stroke downwardly during a crash in order to absorb some of the force of impact. The impending crash detection system 306 can also activate an active landing gear controller 370 to extend and stiffen landing gear 372 for maximum energy absorption.

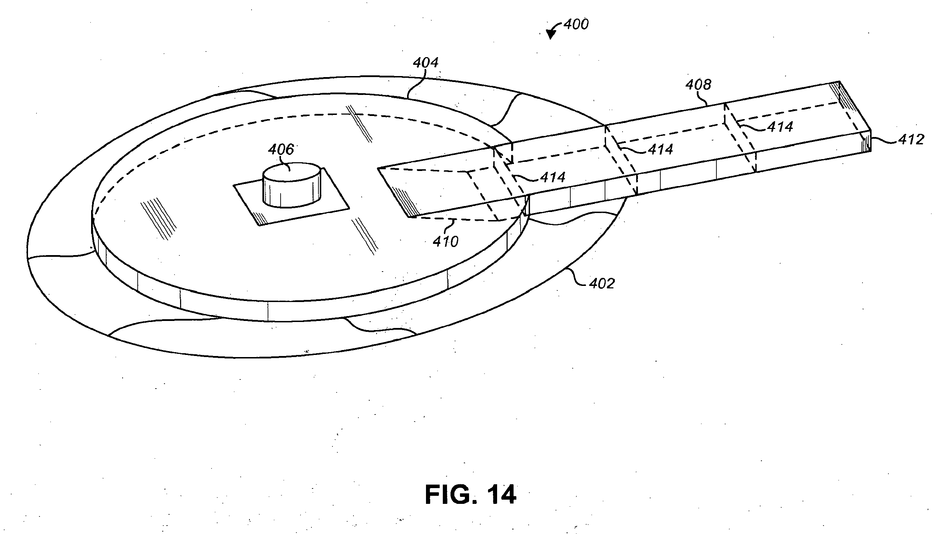

Turning now to Figures 14-21, various embodiments of venting systems for the crash attenuation systems disclosed herein will be described. While the venting system is described below in connection with a single airbag, it should be appreciated that multiple venting systems can be used with multiple airbags on a single aircraft. For example, the venting systems shown in Figures 14-21 can be used with a two-airbag crash attenuation system such as the one shown in Figure 2, and can also be used with a four-airbag crash attenuation system such as the one shown in Figure 11.

Figure 14 shows a partial top view of a venting system 400 for a crash attenuation system comprising an airbag 402 (partially shown in Figure 14) and a housing 404. The venting system 400 would ordinarily be disposed on the underside of an aircraft; however, no aircraft is shown in Figure 14 in order to allow for an unobstructed view of the venting system 400. The airbag 402 can be identical to airbags 112 and 114, and the housing 404 can be identical to the housing 117. The venting system 400 is configured for controlling whether gas is allowed to escape from within the airbag 402 and housing 404. The venting system 400 can be controlled by a control system such as control system 126 or controller 354 as described above. Figure 14 also shows an inflator 406 that is controllable by a control system, such as control system 126 or controller 354, for inflating the airbag 402.

The venting system 400 includes a vent passage 408. The vent passage 408 is formed by rigid substrates, for example formed of sheet metal or another rigid material. The vent passage 408 extends between a first opening 410 within the housing 404, and a second opening 412 external to the airbag 402 and housing 404. One or more vent valves 414 are disposed within the vent passage 408. The vent valves 414 can include active valves that are controllable for regulating the flow of air through the vent passage 408 as described above in connection with vent 118. The vent valves 414 can also include pop-off valves that are designed to burst under the force of a predetermined amount of air pressure.

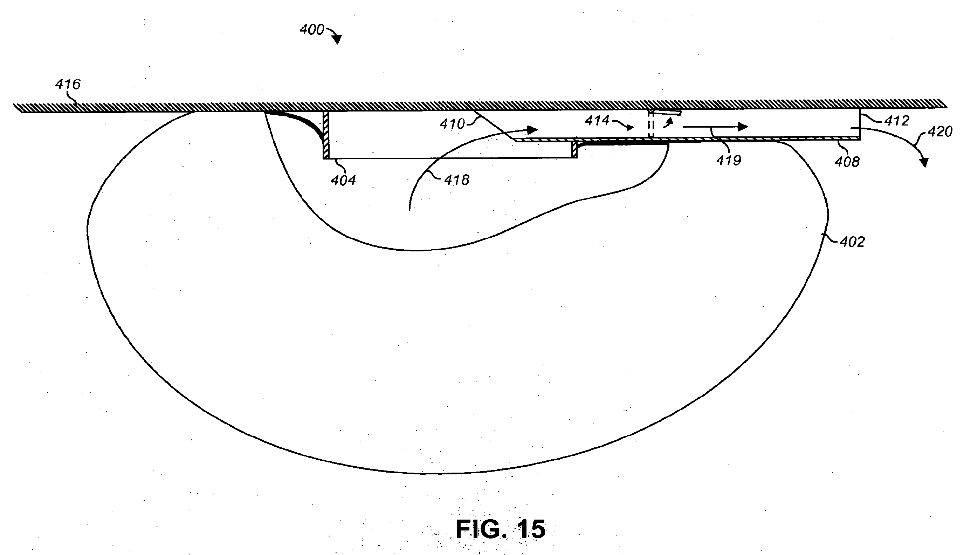

Turning next to Figure 15, a partially-sectioned side view is shown of venting system 400, as well as airbag 402 and housing 404 all supported by an aircraft fuselage 416. In this embodiment, the upper side of the vent passage 408 is flush with the under side of the fuselage 416. In Figure 15, the airbag 402 is inflated and supporting at least a portion of the fuselage 416. In this situation, the airbag 402 is compressed by the weight of the aircraft and the upper portion of the airbag 402 is pressed against the under side of the fuselage 416 and the vent passage 408. The vent passage 408 is at least long enough to extend beyond the upper portion of the airbag 402. Otherwise, the upper portion of the airbag 402 would form a seal that could prevent air from escaping from within the airbag 402.

In Figure 15, the vent passage includes a vent valve 414 that can be controlled to move to any position between the fully open position shown in solid lines and the fully closed position shown in broken lines. As discussed above in connection with vent 118 and vent valve 120, various intermediate positions of the vent valve 414 between the fully opened and fully closed positions can be selected in order to control the amount of gas that is allowed to escape from within the airbag 402 through the vent passage 408. While the vent valve 414 is fully or partially opened, air can escape from within the airbag 402 through the vent passage as indicated by arrows 418-420. While the vent valve 414 is fully closed, the vent passage 408 is sealed by the vent valve 414 so that air cannot escape through the vent passage 408. Also, in the event of a water landing, the vent valve 414 can be fully closed in order to both retain air within the airbag 402 and prevent the airbag 402 from filling with water. As shown in Figure 14, alternative embodiments can include multiple vent valves 414 in series.

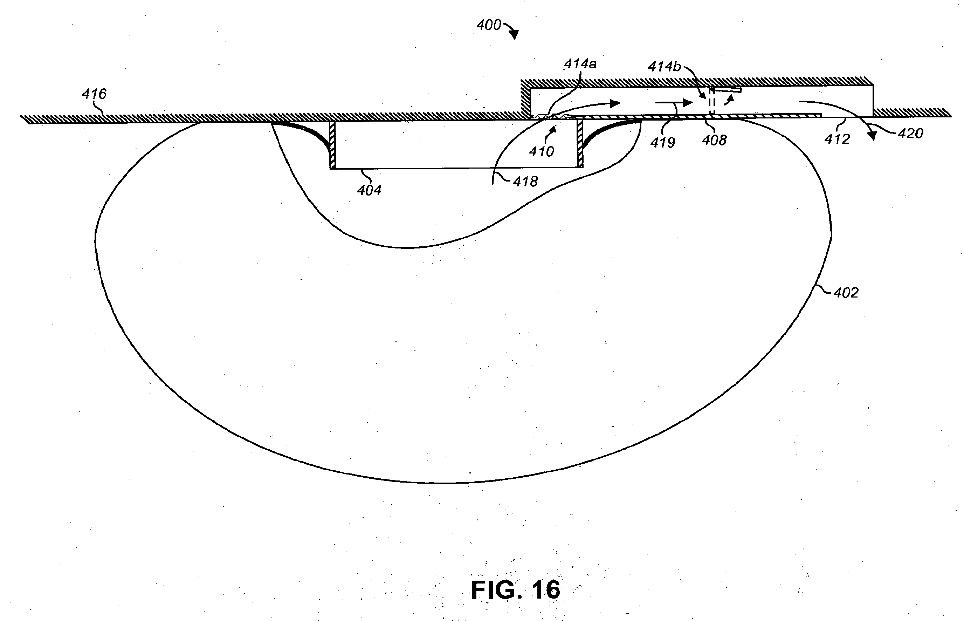

Turning next to Figure 16, an alternative embodiment is shown wherein the vent passage 408 is at least partially contained within the fuselage 416 of the aircraft. While the bottom side of the vent passage 408 is shown flush with the under side of the fuselage 416, in alternative embodiments the vent passage 408 can extend through other portions of the aircraft. In the illustrated embodiment, the second opening 412 opens to the under side of the fuselage 416. In alternative embodiments, the second opening can open to the top, side, or other part of the aircraft so long as the second opening will not be obstructed by the airbag 402.

The embodiment shown in Figure 16 also shows an example of an embodiment of the venting system 400 having multiple vent valves 414. The venting system 400 as shown in Figure 16 includes a pop-off vent valve 414a, which serves as an example of a pop-off pressure release mechanism, in series with an active vent valve 414b. Still further embodiments can include any number of vent valves 414 as desired.

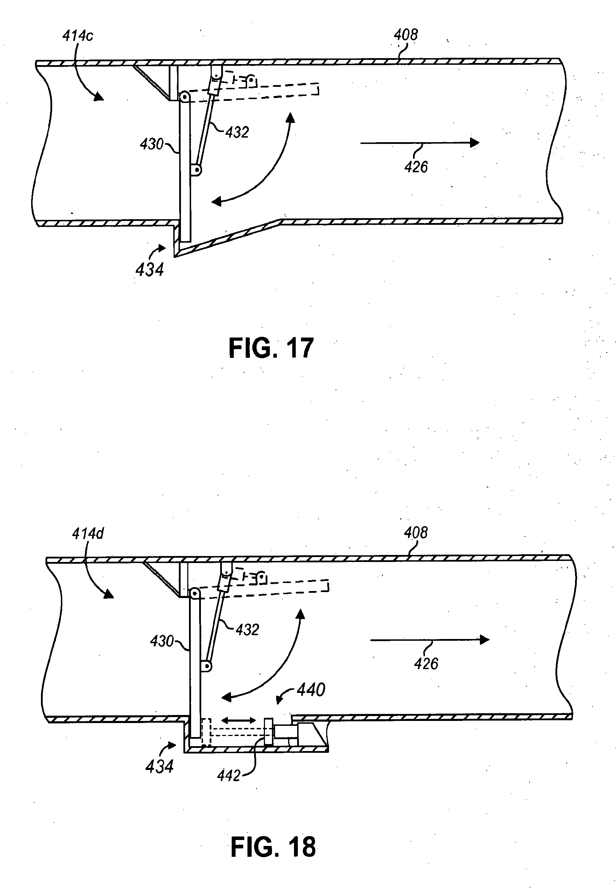

Turning next to Figures 17 and 18, more detailed views are shown of examples of embodiments of active vent valves 414c and 414d, respectively; that can be used with the venting system 400 in combination with, or in place of the active vent valve 120 described above in connection with vent 118. It should be appreciated that these are only examples, and that many modifications are possible to these embodiments, and that there are many other types of controllable valves can be used as an active vent valve 414.

Referring to Figure 17, vent valve 414c is an embodiment of an active vent valve 414 that can be controlled to be fully opened (shown in phantom), fully closed (shown in solid lines), or partially opened to any of a continuous range of partially-opened positions between the fully open and fully closed positions for regulating the flow of air through the vent passage 408. In the view shown in Figure 17, air travels from the airbag 402 in the direction indicated by arrow 426. The vent valve 414c includes a vent plate 430 that is hingedly connected to at least a portion of the vent passage 408. The vent plate 430 is configured to fully seal the vent passage 408 when in the closed position (shown in solid lines) such that air cannot flow through the vent passage 408 when the vent plate 430 is in the fully closed position. An actuator 432 is attached to the vent plate 430. The actuator 432 is configured for moving the vent plate 430 to any desired position, between and including the closed position (shown in solid lines) and fully open position (shown in broken lines) as directed by a control system such as control system 126 or controller 354 as described above.

In the embodiment shown in Figure 17, the vent passage 408 includes a shoulder 434. The shoulder 434 helps provide for a better seal between the vent passage 408 and the vent plate 430. The shoulder 434 can also act as a stop, preventing the vent plate 430 from hyperextending beyond the fully closed position towards the airbag 402, for example under the force of incoming water as might otherwise occur if the airbag 402 were to deploy during a water landing or crash. In alternative embodiments, the shoulder 434 can extend up into the vent passage 408 rather than extending outwardly from the vent passage 408 as shown in Figure 17.

Referring next to Figure 18, the vent valve 414d includes many of the same elements as vent valve 414c, and therefore retains many of the same element numbers. The main difference between vent valve 414c and vent valve 414d is that vent valve 414d includes a controllable locking system 440. The locking system 440 includes an actuator 442 or the like that can be controlled to move between a retracted position shown in solid lines and an extended position shown in broken lines. When the actuator 442 is in the retracted position, the vent plate 430 can be moved by actuator 432 from the closed position to any desired partially or fully opened position. When the actuator 442 is in the extended position, the vent plate 430 is locked into the fully closed position.

While this disclosure has referenced at least one illustrative embodiment, this description is not intended to be construed in a limiting sense. Various modifications and combinations of the illustrative embodiments, as well as other embodiments, will be apparent to persons skilled in the art upon reference to the description.

## Claims

1. An aircraft (100, 200) comprising a crash attenuation system, the system comprising:

   an airbag assembly (111, 211) carried by the aircraft (100, 200) and inflatable generally adjacent an exterior of the aircraft, the airbag assembly (111, 211) comprising an airbag (112, 212, 213, 214, 215, 402) and a vent system (400), wherein the vent system (400) comprises a vent passage (408) supported by the aircraft, the vent passage (408) having a continuously adjustable vent area (127) through which gas can escape from within the first airbag (402);
   a gas source system (128) in fluid communication with an interior of the airbag (112, 212, 213, 214, 215, 402);
   a sensor system (130, 302) for detecting selected crash conditions; and
   a control system (126, 354) for controlling rate at which gas can escape from within the airbag (112, 212, 213, 214, 215, 402) through the vent passage (122, 408) based on the detected crash conditions;
   wherein the vent passage (122, 408) extends between a first opening (410) in the vent passage (408) and a second opening (412) in the vent passage (122, 408); and wherein the first opening (410) is in fluid communication with the interior of the airbag (112, 212, 213, 214, 215, 402), and the second opening (412) is open to the ambient air, and is positioned beyond an outermost extent of the airbag when the airbag (112, 212, 213, 214, 215, 402) is inflated; and **characterised in that** the vent passage (122, 408) is at least long enough to extend beyond the upper portion of the airbag (112, 212, 213, 214, 215, 402); and

      i) the upper side of the vent passage (122, 408) is flush with the under side of the fuselage (416); or
      ii) the bottom side of the vent passage (122, 408) is flush with the under side of the fuselage (416); and

   the vent passage is at least partially contained within the fuselage 416 of the aircraft (100,200).

**2.** The Aircraft of claim 1, wherein the airbag assembly (111, 211) comprises:

> first and second inflatable airbags (112, 212, 213, 214, 215, 402); and wherein
> the vent system (400) comprises first and second vent passages (122, 408) supported by the aircraft (100, 200), the first and second vent passages (122, 408) each having a respective one of first and second continuously adjustable vent areas (127) through which gas can escape from within the first airbag (112, 212, 213, 214, 215, 402);
> the gas source system (128) is in fluid communication with an interior of at least one of the first and second airbags (112, 212, 213, 214, 215, 402) for inflating at least one of the first and second airbags with gas provided by the gas source (128);
> the control system (126, 354) is for controlling the first vent passage (122, 408) and the second vent passage (122, 408) independently of one another based on the detected crash conditions; and
> the first vent passage (122, 408) extends between a first opening (410) in the first vent passage (122, 408) and a second opening (412) in the first vent passage (122, 408); and
> wherein the first opening (410) is in fluid communication with the interior of the first airbag (112, 212, 213, 214, 215, 402), and the second opening (412) is positioned beyond an outermost extent of the first airbag (112, 212, 213, 214, 215, 402) when the first airbag (112, 212, 213, 214, 215, 402) is inflated, so as to avoid obstruction by the first airbag when compressed.

**3.** The Aircraft according to claim 1, wherein the vent system (400) comprises an active vent valve (120, 414) for controlling at least a portion of the adjustable vent area (127).

**4.** The Aircraft according to claim 2, wherein the vent system (400) comprises an active vent valve (120, 414) for controlling at least a portion of the first adjustable vent area (127).

**5.** The according to claim 4 or claim 3, wherein the active vent valve (120, 414) includes a vent plate (124, 430) that is continuously adjustable between a fully closed position and a fully open position.

**6.** The Aircraft according to claim 5 as it depends from claim 4 or claim 3, wherein the vent plate (124, 430) is hingedly connected to the vent passage (122, 408).

**7.** The Aircraft according to claim 5, wherein the first vent passage (122, 408) includes a shoulder (434), and wherein the vent plate (124, 430) is in contact with the shoulder (434) when the vent plate (124, 430) is in the fully closed position.

**8.** The Aircraft according to claim 5, wherein the vent passage (122, 408) includes a shoulder (434), and wherein the vent plate (124, 430) is in contact with the shoulder (434) when the vent plate (124, 430) is in the fully closed position.

**9.** The Aircraft according to claim 7, or claim 8, further comprising a locking system (440 for locking the vent plate (124, 430) in the fully closed position.

**10.** The Aircraft according to claim 1, or claim 2, wherein the vent system comprises a pop-off pressure release mechanism (125, 414a).

**11.** The Aircraft according to claim 2, wherein the control system (126, 354) determines a first open vent area for the first adjustable vent area (127) based on one or more of the detected crash conditions and wherein the control (126, 354) system determines a second open vent area for the second adjustable vent area (127) based on one or more of the detected crash conditions.

**12.** The Aircraft according to claim 1, or claim 2, wherein at least one of the first and second vent passages (122, 408) extends below the aircraft (100, 200).

**13.** The Aircraft according to claim 1, or claim 2, wherein at least one of the first and second vent passages (122, 408) extends through at least a portion of the aircraft (100, 200).

**14.** The according to claim 10, wherein the control system (126, 354) determines an open vent area for the adjustable vent area (127) based on one or more of the detected crash conditions.

**Patentansprüche**

**1.** Flugzeug (100, 200), umfassend ein Aufpralldämpfungssystem, das System umfassend:

> eine Airbag-Baugruppe (111, 211), getragen vom Flugzeug (100, 200) und generell aufblasbar angrenzend an einer Außenseite des Flugzeugs, die Airbag-Baugruppe (111, 211) einen Airbag (112, 212, 213, 214, 215, 402) und ein Lüftungssystem (400) umfassend,
> wobei das Lüftungssystem (400) einen Lüftungskanal (408) umfasst, gestützt vom Flugzeug, der Lüftungskanal (408) einen stufenlos verstellbaren Lüftungsbereich (127) aufweisend, durch den Gas aus dem ersten Airbag (402) entweichen kann;

ein Gasquellensystem (128) in Fluidverbindung mit einem Innenraum des Airbags (112,212,213,214,215,402);

ein Sensorsystem (130, 302) zum Detektieren von selektierten Aufprallbedingungen; und

ein Steuerungssystem (126, 354) zum Steuern der Rate, mit der Gas aus dem Airbag (112, 212, 213, 214, 215, 402) durch den Lüftungskanal (122, 408) basierend auf den detektierten Aufprallbedingungen entweichen kann;

wobei sich der Lüftungskanal (122, 408) zwischen einer ersten Öffnung (410) im Lüftungskanal (408) und einer zweiten Öffnung (412) im Lüftungskanal (122, 408) erstreckt; und

wobei die erste Öffnung (410) in Fluidverbindung mit dem Innenraum des Airbags (112, 212, 213, 214, 215, 402) ist, und die zweite Öffnung (412) gegenüber der Umgebungsluft offen ist, und über ein äußerstes Maß des Airbags hinaus positioniert ist, wenn der Airbag (112, 212, 213, 214, 215, 402) aufgeblasen ist; und

**dadurch gekennzeichnet, dass** der Lüftungskanal (122, 408) mindestens lang genug ist, um sich über den oberen Abschnitt des Airbags (112, 212, 213, 214, 215, 402) hinaus zu erstrecken; und

    i) die obere Seite des Lüftungskanals (122, 408) mit der Unterseite des Rumpfes (416) bündig ist; oder

    ii) die untere Seite des Lüftungskanals (122, 408) mit der Unterseite des Rumpfes (416) bündig ist; und

der Lüftungskanal mindestens teilweise innerhalb des Rumpfes 416 des Flugzeugs (100, 200) enthalten ist.

2.  Flugzeug gemäß Anspruch 1, wobei die Airbag-Baugruppe (111,211) Folgendes umfasst:

    erste und zweite aufblasbare Airbags (112, 212, 213, 214, 215, 402); und wobei das Lüftungssystem (400) erste und zweite Lüftungskanäle (122, 408) umfasst, gestützt vom Flugzeug (100, 200), wobei die ersten und zweiten Lüftungskanäle (122, 408) jeweils einen jeweiligen von ersten und zweiten stufenlos verstellbaren Lüftungsbereichen (127) aufweisen, durch die Gas aus dem ersten Airbag (112, 212, 213, 214, 215, 402) entweichen kann;

    das Gasquellensystem (128) in Fluidverbindung mit einem Innenraum von mindestens einem der ersten und zweiten Airbags (112, 212, 213, 214, 215, 402) ist, um mindestens einen der ersten und zweiten Airbags mit von der Gasquelle (128) bereitgestellten Gas aufzublasen;

    das Steuerungssystem (126, 354) zum Steuern des ersten Lüftungskanals (122, 408) und des zweiten Lüftungskanals (122, 408) unabhängig voneinander basierend auf den selektierten Aufprallbedingungen dient; und

    sich der erste Lüftungskanal (122, 408) zwischen einer ersten Öffnung (410) im ersten Lüftungskanal (122, 408) und einer zweiten Öffnung (412) im ersten Lüftungskanal (122, 408) erstreckt; und

    wobei die erste Öffnung (410) in Fluidverbindung mit dem Innenraum des ersten Airbags (112, 212, 213, 214, 215, 402) ist, und die zweite Öffnung (412) über ein äußerstes Maß des ersten Airbags (112, 212, 213, 214, 215, 402) hinaus positioniert ist, wenn der erste Airbag (112, 212, 213, 214, 215, 402) aufgeblasen ist, um so Behinderung durch den ersten Airbag, wenn komprimiert, zu vermeiden.

3.  Flugzeug gemäß Anspruch 1, wobei das Lüftungssystem (400) ein aktives Lüftungsventil (120, 414) zum Steuern von mindestens einem Abschnitt des verstellbaren Lüftungsbereichs (127) umfasst.

4.  Flugzeug gemäß Anspruch 2, wobei das Lüftungssystem (400) ein aktives Lüftungsventil (120, 414) zum Steuern von mindestens einem Abschnitt des ersten verstellbaren Lüftungsbereichs (127) umfasst.

5.  Flugzeug gemäß Anspruch 4 oder Anspruch 3, wobei das aktive Lüftungsventil (120, 414) eine Lüftungsplatte (124, 430) einschließt, das stufenlos zwischen einer voll geschlossenen Position und einer voll offenen Position verstellbar ist.

6.  Flugzeug gemäß Anspruch 5 in Abhängigkeit von Anspruch 4 oder Anspruch 3, wobei die Lüftungsplatte (124, 430) gelenkig mit dem Lüftungskanal (122, 408) verbunden ist.

7.  Flugzeug gemäß Anspruch 5, wobei der erste Lüftungskanal (122, 408) eine Schulter (434) einschließt, und wobei die Lüftungsplatte (124, 430) mit der Schulter (434) in Kontakt ist, wenn die Lüftungsplatte (124, 430) in der voll geschlossenen Position ist.

8.  Flugzeug gemäß Anspruch 5, wobei der Lüftungskanal (122, 408) eine Schulter (434) einschließt, und wobei die Lüftungsplatte (124, 430) mit der Schulter (434) in Kontakt ist, wenn die Lüftungsplatte (124, 430) in der voll geschlossenen Position ist.

9.  Flugzeug gemäß Anspruch 7, oder Anspruch 8, ferner umfassend ein Arretierungssystem (440) zum Arretieren der Lüftungsplatte (124, 430) in der voll geschlossenen Position.

10. Flugzeug gemäß Anspruch 1, oder Anspruch 2, wobei das Lüftungssystem einen Pop-Off-Druckfreigabe-Mechanismus (125, 414a) umfasst.

11. Flugzeug gemäß Anspruch 2, wobei das Steuerungssystem (126, 354) einen ersten offenen Lüftungsbereich für den ersten verstellbaren Lüftungsbereich (127) basierend auf einer oder mehreren der detektierten Aufprallbedingungen bestimmt und wobei das Steuerungssystem (126, 354) einen zweiten offenen Lüftungsbereich für den zweiten verstellbaren Lüftungsbereich (127) basierend auf einer oder mehreren der detektierten Aufprallbedingungen bestimmt.

12. Flugzeug gemäß Anspruch 1, oder Anspruch 2, wobei sich mindestens einer der ersten und zweiten Lüftungskanäle (122, 408) unter das Flugzeug (100, 200) erstreckt.

13. Flugzeug gemäß Anspruch 1, oder Anspruch 2, wobei sich mindestens einer der ersten und zweiten Lüftungskanäle (122, 408) durch mindestens einem Abschnitt des Flugzeugs (100, 200) erstreckt.

14. Flugzeug gemäß Anspruch 10, wobei das Steuerungssystem (126, 354) einen offenen Lüftungsbereich für den verstellbaren Lüftungsbereich (127) basierend auf einer oder mehreren der detektierten Aufprallbedingungen bestimmt.

**Revendications**

1. Un aéronef (100, 200) comprenant un système d'atténuation d'impact, le système comprenant:

    un ensemble coussin de sécurité gonflable (111, 211) installé dans l'aéronef (100, 200) et gonflable généralement adjacent à un extérieur de l'aéronef, l'ensemble coussin de sécurité gonflable (111, 211) comprenant un coussin de sécurité gonflable (112, 212, 213, 214, 215, 402) et un système d'aération (400),
    où le système d'aération (400) comprend un conduit d'aération (408) soutenu par l'aéronef, le conduit d'aération (408) possédant une zone d'aération ajustable en continu (127) au travers de laquelle un gaz peut s'échapper de l'intérieur du premier coussin de sécurité gonflable (402),
    une système de source de gaz (128) en communication fluidique avec un intérieur du coussin de sécurité gonflable (112, 212, 213, 214, 215, 402),

    un système de capteur (130, 302) destiné à la détection de conditions d'impact sélectionnées, et
    un système de commande (126, 354) destiné à la commande de la vitesse à laquelle un gaz peut s'échapper de l'intérieur du coussin de sécurité gonflable (112, 212, 213, 214, 215, 402) au travers du conduit d'aération (122, 408) en fonction des conditions d'impact détectées,
    où le conduit d'aération (122, 408) s'étend entre une première ouverture (410) dans le conduit d'aération (408) et une deuxième ouverture (412) dans le conduit d'aération (122, 408), et où la première ouverture (410) est en communication fluidique avec l'intérieur du coussin de sécurité gonflable (112, 212, 213, 214, 215, 402), et la deuxième ouverture (412) est ouverte sur l'air ambiant et est positionnée au-delà d'une étendue la plus extérieure du coussin de sécurité gonflable lorsque le coussin de sécurité gonflable (112, 212, 213, 214, 215, 402) est gonflé, et
    **caractérisé en ce que** le conduit d'aération (122, 408) est au moins suffisamment long pour s'étendre au-delà de la partie supérieure du coussin de sécurité gonflable (112, 212, 213,214,215,402), et

        i) le côté supérieur du conduit d'aération (122, 408) est à fleur avec le dessous du fuselage (416), ou
        ii) le côté inférieur du conduit d'aération (122, 408) est à fleur avec le dessous du fuselage (416), et

    le conduit d'aération est au moins partiellement contenu à l'intérieur du fuselage (416) de l'aéronef (100, 200).

2. L'aéronef selon la Revendication 1, où l'ensemble coussin de sécurité gonflable (111, 211) comprend :

    un premier et un deuxième coussins de sécurité gonflables (112, 212, 213, 214, 215, 402), et où le système d'aération (400) comprend un premier et un deuxième conduits d'aération (122, 408) soutenus par l'aéronef (100, 200), les premier et deuxième conduits d'aération (122, 408) possédant chacun une zone respective parmi les première et deuxième zones d'aération ajustables en continu (127) au travers de laquelle un gaz peut s'échapper de l'intérieur du premier coussin de sécurité gonflable (112, 212, 213, 214, 5 215, 402),
    le système de source de gaz (128) est en communication fluidique avec un intérieur d'au moins un coussin parmi les premier et deuxième coussins de sécurité gonflables (112, 212, 213, 214, 215, 402) de façon à gonfler au moins un coussin parmi les premier et deuxième coussins de sécurité gonflables avec un gaz fourni par la source de gaz (128),

le système de commande (126, 354) est destiné à la commande du premier conduit d'aération (122, 408) et du deuxième conduit d'aération (122, 408) indépendamment l'un de l'autre en fonction des conditions d'impact détectées, et

le premier conduit d'aération (122, 408) s'étend entre une première ouverture (410) dans le premier conduit d'aération (122, 408) et une deuxième ouverture (412) dans le premier conduit d'aération (122, 408), et

où la première ouverture (410) est en communication fluidique avec l'intérieur du premier coussin de sécurité gonflable (112, 212, 213, 214, 215, 402) et la deuxième ouverture (412) est positionnée au-delà d'une étendue la plus extérieure du premier coussin de sécurité gonflable (112, 212, 213, 231, 215, 402) lorsque le premier coussin de sécurité gonflable (112, 212, 213, 214, 215, 402) est gonflé de façon à éviter une obstruction par le premier coussin de sécurité gonflable lorsqu'il est comprimé.

**3.** L'aéronef selon la Revendication 1, où le système d'aération (400) comprend une soupape d'aération active (120, 414) destinée à la commande d'au moins une partie de la zone d'aération ajustable (127).

**4.** L'aéronef selon la Revendication 2, où le système d'aération (400) comprend une soupape d'aération active (120, 414) destinée à la commande d'au moins une partie de la première zone d'aération ajustable (127).

**5.** L'aéronef selon la Revendication 4 ou 3, où la soupape d'aération active (120, 414) comprend une plaque d'aération (124, 430) qui est ajustable de manière continue entre une position totalement fermée et une position totalement ouverte.

**6.** L'aéronef selon la Revendication 5 lorsqu'elle dépend de la Revendication 4 ou 3, où la plaque d'aération (124, 430) est raccordée par des charnières au conduit d'aération (122, 408).

**7.** L'aéronef selon la Revendication 5, où le premier conduit d'aération (122, 408) comprend un épaulement (434) et où la plaque d'aération (124, 430) est en contact avec l'épaulement (434) lorsque la plaque d'aération (124, 430) est dans la position totalement fermée.

**8.** L'aéronef selon la Revendication 5, où le conduit d'aération (122, 408) comprend un épaulement (434) et où la plaque d'aération (124, 430) est en contact avec l'épaulement (434) lorsque la plaque d'aération (124, 430) est dans la position totalement fermée.

**9.** L'aéronef selon la Revendication 7 ou 8, comprenant en outre un système de verrouillage (440) destiné au verrouillage de la plaque d'aération (124, 430) dans la position totalement fermée.

**10.** L'aéronef selon la Revendication 1 ou 2, où le système d'aération comprend un mécanisme de libération de pression amovible (125, 414a).

**11.** L'aéronef selon la Revendication 2, où le système de commande (126, 354) détermine une première zone d'aération ouverte pour la première zone d'aération ajustable (127) en fonction d'une ou de plusieurs des conditions d'impact détectées et où le système de commande (126, 354) détermine une deuxième zone d'aération ouverte pour la deuxième zone d'aération ajustable (127) en fonction d'une ou de plusieurs des conditions d'impact détectées.

**12.** L'aéronef selon la Revendication 1, ou 2, où au moins un conduit parmi les premier et deuxième conduits d'aération (122, 408) s'étend sous l'aéronef (100, 200).

**13.** L'aéronef selon la Revendication 1, ou 2, où au moins un conduit parmi les premier et deuxième conduits d'aération (122, 408) s'étend au travers d'au moins une partie de l'aéronef (100, 200).

**14.** L'aéronef selon la Revendication 10, où le système de commande (126, 354) détermine une zone d'aération ouverte pour la zone d'aération ajustable (127) en fonction d'une ou de plusieurs des conditions d'impact détectées.

FIG. 1A

FIG. 1B

FIG. 1C

FIG. 1D

FIG. 1E

FIG. 2

EP 2 459 443 B1

FIG. 3

EP 2 459 443 B1

FIG. 4A

FIG. 4B

FIG. 4C

FIG. 5

FIG. 6

EP 2 459 443 B1

```
┌──────────┐  ┌──────────┐  ┌──────────┐  ┌──────────┐  ┌──────────┐
│   SINK   │  │   Fwd    │  │PITCH/ROLL│  │PITCH/ROLL│  │PROXIMITY │
│  SPEED   │  │  SPEED   │  │ ATTITUDE │  │   RATE   │  │TO GROUND │
└──────────┘  └──────────┘  └──────────┘  └──────────┘  └──────────┘
```

SENSOR SUITE FOR IMPACT SCENARIO — 130

CRASH PREDICTOR AND MICRO-PROCESSOR — 126

ACTIVE VENT VALVE ALGORITHM TO CALCULATE VENT AREA — 126B

126A

MECHANISM TO ACTIVELY OPEN VENT VALVE — 120

DEPLOY EXTERNAL AIRBAGS

*FIG. 7*

FIG. 8

FIG. *9D*

FIG. *9C*

FIG. *9B*

FIG. *9A*

EP 2 459 443 B1

FIG. 10

FIG. 11

300 ⬎

```
                    ┌──────────────┐        ┌──────────────┐
                    │   Impact     │        │   Impact     │
                    │  Detection   │───────▶│   Safety     │
                    │   System     │        │   Systems    │
   ┌──────────┐     │     304      │        │     308      │
   │  Sensor  │────▶└──────┬───────┘        └──────────────┘
   │  System  │            │
   │   302    │            ▼
   └──────────┘     ┌──────────────┐        ┌──────────────┐
         │          │  Impending   │        │  Impending   │
         │          │    Crash     │───────▶│ Crash Safety │
         └─────────▶│   System     │        │   Systems    │
                    │     306      │        │     310      │
                    └──────────────┘        └──────────────┘
```

# FIG. 12

**FIG. 13**

EP 2 459 443 B1

**FIG. 14**

EP 2 459 443 B1

FIG. 15

EP 2 459 443 B1

FIG. 16

EP 2 459 443 B1

**FIG. 17**

**FIG. 18**

**EP 2 459 443 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200905484 A
- WO 2008054401 A

- US 5431361 A, Carnell